# EUROPÄISCHE PATENTANMELDUNG

(11) **EP 2 883 663 A1**
(43) Veröffentlichungstag der Anmeldung: **17.06.2015**
(21) Anmeldenummer: 13197273.9
(22) Anmeldetag: 13.12.2013
(51) Int. Cl.: B25D 17/08, B23P 15/28

(54) **Herstellungsverfahren für einen Werkzeughalter**

(71) Anmelder: HILTI Aktiengesellschaft, 9494 Schaan (LI)
(72) Erfinder: Meixner, Ralf, 87656 Germaringen (DE); Kondratiuk, Jens, 9470 Buchs/SG (CH); Schallert, Manfred, 6710 Nenzing (AT); Bischof, Michael, 6900 Bregenz (AT)
(74) Vertreter: Hilti Aktiengesellschaft Corporate Intellectual Property

(57) **Zusammenfassung**

Das erfindungsgemäße Herstellungsverfahren für einen Werkzeughalter sieht folgende Schritte vor. Eine hohle Spindel (Grundkörper) wird geformt. Wenigstens eine längliche Aussparung ist in der Wand vorgesehen. Die Spindel ist aus einem ersten Werkstoff, der unoder niedriglegierte Stähle umfasst. Ein Einsatz wird aus einem zweiten Werkstoff, einem hochlegierten Werkzeugstahl geformt. Der Einsatz hat einen zu der Aussparung komplementären Sockel und einen Steg. Der Einsatz wird in die hohle Spindel derart eingelegt, dass der Sockel in der Aussparung liegt und der Steg in einen Innenraum der Spindel vorsteht. Der Sockel wird in die Aussparung bei einer Temperatur, die über der AC3-Temperaturen der verwendeten Stähle liegt, eingelötet. Der Verbundes aus der hohlen Spindel und dem Einsatz wird abgekühlt. Eine Wärmebehandlung des Verbundes wird in einer kohlenstoffhaltigen Atmosphäre durchgeführt, deren Kohlenstoffgehalt ausreichend zum Aufkohlen der hohlen Spindel und nicht ausreichend zum Aufkohlen des Einsatzes ist. Die Wärmebehandlung des Verbundes erfolgt bei einer Temperatur zwischen 800 Celsius und 950 Celsius. Der Verbund wird in einem Salzbad oder Flüssigkeitsbad anschließend an die Wärmebehandlung abgekühlt.

## Beschreibung

### GEBIET DER ERFINDUNG

Die vorliegende Erfindung betrifft ein Herstellungsverfahren für einen Werkzeughalter, insbesondere einer drehenden und meißelnden Handwerkzeugmaschine.

US 7,338,051 beschreibt einen Werkzeughalter für einen Kombihammer. Der Werkzeughalter hat einen rohrförmigen Grundkörper, in dessen Innenraum der Bohrer aufgenommen längs seiner Achse beweglich ist. Verriegelungselemente greifen in den Innenraum ein und sichern den Bohrer gegen ein Herausfallen. Zudem hat der Werkzeughalter Stege, welche in korrespondierende Nuten des Bohrers eingreifen, um ein Drehmoment von dem Werkzeughalter auf den Bohrer zu übertragen. Die Stege sind aus einem gesinterten Hartmetall und werden als Einsätze in den Grundkörper eingesetzt. Das gesinterte Hartmetall ist sehr abriebfest. Das Befestigen der Stege erfolgt in überlappenden Bohrungen in dem Grundkörper. Für eine dauerhafte Fixierung werden Kleben, Presssitz, Löten oder Schweißen, Laserschweißen aufgezählt.

Der Steg unterliegt sehr hohen mechanischen Belastungen. Spitzenbelastungen des Drehmoments entstehen unter Anderem, wenn der Bohrer während des Bohrens sich an einem Armierungseisen verhakt. Ferner sind der Einsatz und der Grundkörper den Erschütterungen durch das Schlagwerk ausgesetzt. An die Dauerfestigkeit der Verbindung zwischen Steg und Grundkörper sind hohe Anforderungen gestellt. Das Löten und Schweißen von gesinterten Hartmetallen ist aufwändig, Kleben und Presssitz scheinen keine geeignete Maßnahmen zu sein.

Der Steg soll eine hohe Abriebfestigkeit aufweisen und dennoch bei der Herstellung des Werkzeughalters einfach zu verarbeiten sein.

Der zweite Werkstoff ist vorzugsweise ein Kaltarbeitsstahl oder ein Schnellarbeitsstahl; Warmarbeitsstähle erweisen sich nach dem Löten und der Wärmebehandlung als vergleichsweise weich.

### OFFENBARUNG DER ERFINDUNG

Das erfindungsgemäße Herstellungsverfahren für einen Werkzeughalter sieht folgende Schritte vor. Eine hohle Spindel (Grundkörper) wird geformt. Wenigstens eine längliche Aussparung ist in der Wand vorgesehen. Die Spindel ist aus einem ersten Werkstoff, der un- oder niedriglegierte Stähle umfasst. Ein Einsatz wird aus einem zweiten Werkstoff, einem hochlegierten Werkzeugstahl geformt. Der Einsatz hat einen zu der Aussparung komplementären Sockel und einen Steg. Der Einsatz wird in die hohle Spindel derart eingelegt, dass der Sockel in der Aussparung liegt und der Steg in einen Innenraum der Spindel vorsteht. Der Sockel wird in die Aussparung bei einer Temperatur, die über der AC3-Temperaturen der verwendeten Stähle liegt, eingelötet. Der Verbundes aus der hohlen Spindel und dem Einsatz wird abgekühlt. Eine Wärmebehandlung des Verbundes wird in einer kohlenstoffhaltigen Atmosphäre durchgeführt, deren Kohlenstoffgehalt ausreichend zum Aufkohlen der hohlen Spindel und nicht ausreichend zum Aufkohlen des Einsatzes ist. Die Wärmebehandlung des Verbundes erfolgt bei einer Temperatur zwischen 800 Celsius und 950 Celsius. Der Verbund wird in einem Salzbad oder Flüssigkeitsbad anschließend an die Wärmebehandlung abgekühlt.

Überraschenderweise ergibt sich bei dem Herstellungsverfahren ein abriebfester Steg. Ein Werkzeugstahl erreicht seine Härte aufgrund eines sehr spezifischen mehrstufigen Härtungsprozesses, dessen Temperaturprofile die Stahllieferanten angeben. Der Härtungsprozess enthält zumindest ein Aufheizen auf eine Temperatur, bei welcher Carbide in Lösung übergehen, und ein dreimaliges Anlassen bei einer Temperatur zwischen 500 und 600 Celsius. Das dritte Anlassen wird in der Literatur als wesentlich beschrieben, um in dem zweiten Werkstoff Restaustenit und daraus beim Abkühlen entstehendes glasartiges Martensit zu beseitigen und die gewünschte Belastbarkeit des Werkzeugstahls zu erhalten. Der Werkzeugstahl verliert seine Härte, wenn er deutlich über 600 Celsius erwärmt wird, ein Weichglühen wird bei etwa 800 Celsius erwartet. Sowohl die Temperatur beim Löten als auch die Temperatur des nachfolgenden Wärmebehandlungsschritts sprechen nach gängiger Lehre gegen die Verwendung von Werkzeugstahl für den Steg.

Der Wärmebehandlung des Verbundes kann ein Anlassen bei 180 Celsius bis 210 Celsius folgen, welches Spannungen insbesondere in der hohlen Spindel beseitigt.

Der Einsatz wird vorteilhaft mittels eines Schmiedeverfahrens oder eines Feingussverfahrens geformt.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Kombihammer
- Fig. 2: einen Werkzeughalter,
- Fig. 3: den Werkzeughalter im Querschnitt der Ebene III;
- Fig. 4: einen Einsatz in Draufsicht;

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

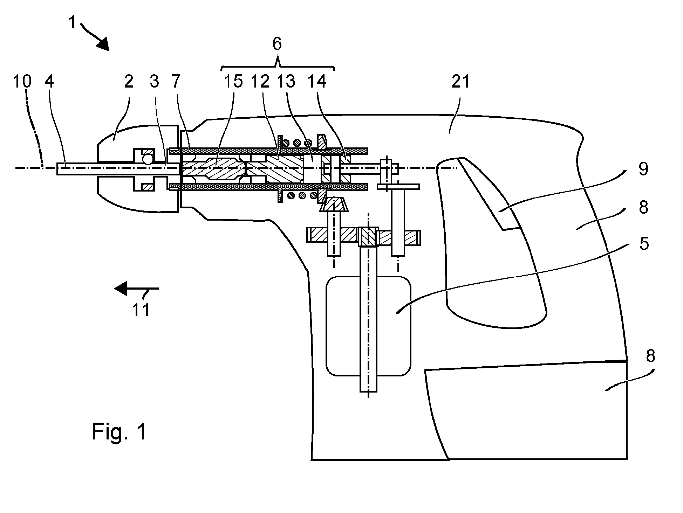

Fig. 1 zeigt als Beispiel einer meißelnden Handwerkzeugmaschine schematisch einen Kombihammer **1.** Der Kombihammer **1** hat einen Werkzeughalter **2,** in welchen ein Schaftende **3** eines Werkzeug, z.B. eines des Hammerbohrers **4,** eingesetzt werden kann. Einen primären Antrieb des Kombihammers **1** bildet ein Motor **5,** welcher ein Schlagwerk **6** und eine Abtriebswelle **7** antreibt. Ein Anwender kann den Kombihammer **1** mittels eines Handgriffs **8** führen und mittels eines Systemschalters **9** den Kombihammer **1** in Betrieb nehmen. Im Betrieb dreht der Kombihammer **1** den Hammerbohrer **4** kontinuierlich um eine Arbeitsachse **10** und kann dabei den Hammerbohrer **4** in Schlagrichtung **11** längs der Arbeitsachse **10** in einen Untergrund schlagen. Das Schlagwerk **6** ist vorzugsweise ein motorgetriebenes pneumatisches Schlagwerk **6.** Ein Schläger **12** ist über eine Luftfeder **13** an einen von dem Motor **5** längs einer Arbeitsachse **10** hin- und herbewegten Kolben **14** angekoppelt. Der Schläger **12** schlägt unmittelbar oder mittelbar durch einen Döpper **15** auf das Schaftende **3.**

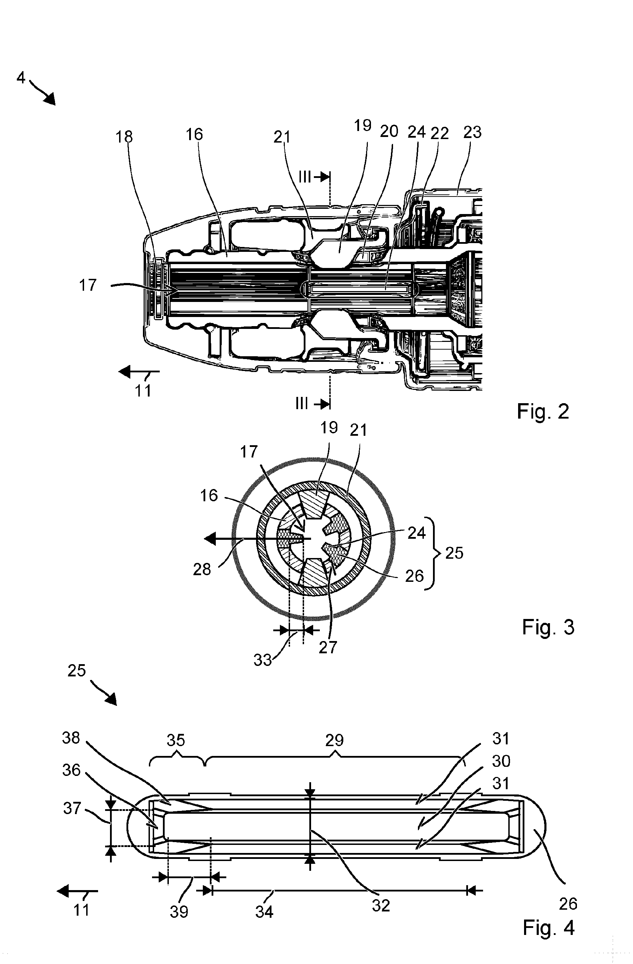

Der Werkzeughalter **2** ist im Detail in Fig. 2 in einem Längsschnitt und in einem Querschnitt in Fig. 3 dargestellt. Der Werkzeughalter **2** hat eine von der Abtriebswelle **7** angetriebene hohle Spindel **16** (Grundkörper) mit einem Aufnahmeraum **17** für das Werkzeug **4.** Der Hammerbohrer **4** kann durch eine abtriebsseitige Öffnung **18** in Einsetzrichtung (entgegen der Schlagrichtung **11)** in den Aufnahmeraum **17** eingesetzt werden. Der Aufnahmeraum **17** ist vorzugsweise komplementär zu dem Schaftende **3,** z.B. zylindrisch ausgebildet.

Eine lösbare Verriegelung des mit Verriegelungsnuten versehenen Hammerbohrers **4** in dem Aufnahmeraum **17** erfolgt mittels Sperrkörpern, hier beispielsweise mit Klinken **19.** Die Klinken **19** sind in Langlöcher **20** in einer Wand der hohlen Spindel **16** eingesetzt. Ein radiale Hemmung der Klinken **19** erfolgt durch einen Verriegelungsring **21,** an welchem radial von innen anliegend die Klinken **19** teilweise in den Aufnahmeraum **17** hineinragen. Der in den Aufnahmeraum **17** hineinragende Teil der Klinken **19** kann in die Verriegelungsnut des Werkzeugs **4** eingreifen. Ein federbelasteter Schieber **22** hält die Klinken **19** innerhalb des Verriegelungsrings **21,** d.h. axial mit dem Verriegelungsring **21** überlappend. Beim Einsetzen des Hammerbohrers **4** werden die Klinken **19** gegen den federbelasteten Schieber **22** verschoben und gelangen aus dem Eingriff mit dem Verriegelungsring **21.** Die Klinken **19** können radial ausweichen und den Aufnahmeraum **17** freigeben. Die Klinken **19** können durch eine Betätigungshülse **23** gegen den federbelasteten Schieber **22** verschoben werden, wodurch die radiale Hemmung der Klinken **19** aufgehoben wird und der Hammerbohrer **4** entnehmbar ist.

Die Drehbewegung der hohlen Spindel **16** werden über in den Aufnahmeraum **17** ragende Stege **24** auf den Hammerbohrer **4** übertragen. Die beispielhafte Ausgestaltung des Werkzeughalters **2** hat einen Steg **24.** Alternative Werkzeughalter **4,** insbesondere für Hammerbohrer großer Durchmesser können zwei oder Stege **24** aufweisen. Der Steg **24** ist längs der Arbeitsachse **10** auf der Höhe der Langlöcher **20** für die Klinken **19.**

Der Steg **24** ist der in den Aufnahmeraum **17** überstehende Teil eines Einsatzes **25.** Der Einsatz **25** hat den Steg **24** und einen Sockel **26.** Die hohle Spindel **16** hat für jeden Steg **24** eine Aussparung **27,** in welche der Sockel **26** in radialer Richtung **28** eingelegt ist. Die Aussparung **27** ist komplementär zu dem Sockel **26.** Der Sockel **26** ist durch Löten in der Aussparung **27** dauerhaft fixiert. Der gesamt Einsatz **25** ist vorzugsweise monolithisch, d.h. aus einem Material und ohne Fügezonen zusammenhängend. Der Einsatz **25** kann aus einem Werkzeugstahl hergestellt sein. Die hohle Spindel **16** ist aus einem anderen Material, z.B. aus einem hergestellt.

Der Steg **24** hat einen Hauptabschnitt **29.** Der Hauptabschnitt **29** überträgt im Wesentlichen das gesamte Drehmoment auf den Kombihammer **1.** Die freiliegenden Außenflächen, insbesondere eine Dachfläche **30** und zwei Seitenflächen **31,** des Hauptabschnitts **29** sind zu der Arbeitsachse **10** parallel. Die Außenflächen begrenzen einen trapezförmigen Querschnitt, der längs der Arbeitsachse **10** über die gesamte Länge des Hauptabschnitts **29** konstant ist. Die Dachfläche **30** ist senkrecht zu einer radialen Richtung **28** (vertikale Richtung). Die Seitenflächen **31** grenzen vorzugsweise an die gegenüberliegenden Längskanten der Dachfläche **30** an. Die Seitenflächen **31** sind vorzugsweise zueinander zwischen 20 Grad und 40 Grad geneigt. Der Steg **24** ist damit vorzugsweise an seiner Bodenfläche, d.h. auf dem Sockel **26,** breiter als an der Dachfläche **30.** Eine mittlere Breite **32** des Steges **24** ist etwa gleich, z.B. um weniger als 20 % verschieden, zu der Höhe **33** des Steges **24.** Eine Länge **34** des Hauptabschnitts **29** ist wenigstens das Dreifache der Höhe **33.** Der Steg **24** muss ausreichend lang für die Übertragung des Drehmoments auf den Bohrer **4** sein.

Der Steg **24** hat einen hinteren Abschnitt **35,** der in Schlagrichtung **11** nach dem Hauptabschnitt **29** angeordnet ist. Der hintere Abschnitt **35** hat eine Stirnfläche **36,** welche in Schlagrichtung **11** weist. Die Stirnfläche **36** ist vorzugsweise trapezförmig. Die Normale der Stirnfläche **36** liegt in einer Ebene aufgespannt von der Arbeitsachse **10** und der vertikalen Richtung **28.** Die beispielhafte Stirnfläche **36** ist nicht senkrecht zu der Arbeitsachse **10** sondern zwischen 70 Grad und 80 Grad geneigt. Die Stirnfläche **36** ist vorzugsweise eben. Die Stirnfläche **36** ist etwas schmaler als der Hauptabschnitt **29,** d.h. kleiner als der trapezförmige Querschnitt. Eine Breite **37** des Stirnfläche **36** am Sockel **26** liegt zwischen 80 % und 90 % der Breite **32** des Querschnitts an dem Sockel **26.**

Zwei gegenüberliegende Einlaufflächen **38** grenzen seitlich an die Stirnfläche **36** an. Die Einlaufflächen **38** verbinden die Stirnfläche **36** mit den Seitenflächen **31.** Die ebenen Einlaufflächen **38** sind gegenüber den Seitenflächen **31** etwas geneigt, vorzugsweise zwischen 2 Grad und 10 Grad. Die Einlaufflächen **38** reichen vorzugsweise von dem Sockel **26** bis zu der Dachfläche **30.** Eine Länge **39** der Einlaufflächen **38** entspricht etwa dem Abstand der beiden Einlaufflächen **38,** d.h. der Breite 37 des Steges **24.**

Der Sockel **26** ist länger und breiter als der Steg **24.** Der Sockel **26** ist an seinen Längsenden durch halbzylindrische Endstücke abgeschlossen. Zwischen den beiden Endstücken ist der Sockel **26** im Wesentlichen quaderförmig. Die Aussparung **27** hat entsprechend ebenfalls halbzylindrische Enden mit einem quaderförmigen Zwischenbereich.

Die hohle Spindel **16** wird beispielsweise aus einem rohrförmigen Rohling hergestellt. Der rohrförmige Rohling kann kalt auf das gewünschte Innenprofil aufgeweitet werden. Anschließend werden die Innen- und Außenflächen spanend bearbeitet. Zudem werden die Langlöcher **20** für die Klinken **19** und die Aussparung **27** für den Einsatz **25** spanend, z.B. mit einem Fräskopf, ausgebildet. Lagerabschnitte können auf einen Solldurchmesser getrimmt und poliert werden.

Der Stahl des rohrförmigen Rohlings ist vorzugsweise ein niedriglegierter Stahl, z.B. 16MnCr5. Ein Kohlenstoffgehalt ist geringer als 0,4 Gew.-% vorzugsweise größer als 0,1 Gew.-%. Der Stahl ist niedriglegiert; die gesamte Beimischung von Legierungselementen ist geringer als 5 Gew.-%. Chrom kann hierbei den höchsten Anteil aufweisen, z.B. zwischen 1,0 und 2,2 Gew.-%. Der Stahl kann auch unlegiert sein. Der Kohlenstoffgehalt ist dabei ebenfalls geringer als 0,4 Gew.-%.

Der Einsatz **25** wird vorzugsweise ohne spanende Bearbeitung hergestellt. Der Einsatz **25** wird beispielsweise aus einem stählernen Rohling geschmiedet. Die Formgebung erfolgt beispielsweise durch ein Gesenk, in welches der Rohling eingelegt wird. Das Gesenk kann beispielsweise mehrteilig ausgebildet sein und hat die komplementäre Form zu dem Einsatz **25,** d.h. dem Steg **24** mit dem Sockel **26.** Der Rohling wird bei einer Temperatur zwischen 950 Celsius und 1150 Celsius geschmiedet. Dabei wird die AC3-Temperatur des Stahls überschritten, wodurch sich Austenit ausbildet. Nach der Formgebung kühlt der Einsatz **25,** vorzugsweise an Luft, auf Raumtemperatur ab. Der Einsatz **25** kann alternativ mittels eines Feingussverfahrens hergestellt werden.

Der Rohling für den Einsatz **25** ist ein Werkzeugstahl, z.B. X155CrVMo12-1. Der Kohlenstoffgehalt ist größer als 0,8 Gew.-%, vorzugsweise geringer als 2,2 Gew.-%. Der Rohling ist hoch legiert, der Anteil der gesamten Legierungselemente ist größer als 7 Gew.-%.

Der Einsatz **25** wird in die Aussparung **27** der hohlen Spindel **16** gelegt. Ein Lotmittel, vorzugsweise ein kupferhaltiges Lot, wird zwischen dem **Einsatz 25** und der hohlen Spindel **16** eingebracht. Der Einsatz **25** wird, z.B. in einem Lötofen, bei einer Temperatur im Bereich von 1030 Celsius und 1070 Celsius an der hohlen Spindel **16** angelötet. Der Lötvorgang dauert zwischen 20 Minuten und 60 Minuten. Während des Lötens werden die Stähle der hohlen Spindel **16** und des Einsatzes **25** über ihre Rekristallisationstemperatur erhitzt. Der Werkzeugstahl verliert dabei an Härte. Nach dem Löten kühlt der Verbund aus hohler Spindel **16** und Einsatz **25,** vorzugsweise an Luft oder in einer anderen Gasatmosphäre, ab.

Der Verbund wird in einem unmittelbar nachfolgenden Schritt wärmebehandelt. Der Verbund wird auf eine Temperatur zwischen 800 Celsius und 950 Celsius erhitzt. Die Temperatur kann in zwei oder mehr Schritten angehoben werden, um thermomechanische Spannungen in dem Verbund zu minimieren. Der Verbund wird für 30 Minuten bis 2 Stunden bei der Temperatur gehalten. Die Temperatur liegt deutlich unterhalb einer Temperatur, welche für das Härten des Werkzeugstahls geeignet ist. Bei dem beispielhaften Werkzeugstahl X155CrVMo12-1 wird diese mit 1160 bis 1190 Celsius angegeben. Auch ist diese Temperatur atypisch für die dreimalig wiederholten Wärmebehandlungen bei Werkzeugstahl, welche maximal bei einer Temperatur zwischen 400 und 600 Celsius erfolgen, um die typische Härte und Belastbarkeit eines Werkzeugstahls zu erhalten.

Die Wärmebehandlung erfolgt in einer kohlenstoffhaltigen Atmosphäre, z.B. in einem Gasaufkohlungsofen. Der Kohlenstoffpegel wird durch Beimengen von z.B. Methanol und Propan erhöht. Eine C-Pegelregelung hält den Kohlenstoffpegel während der Wärmebehandlung vorzugsweise konstant. Der Kohlenstoffpegel ist derart gewählt, dass die hohle Spindel **16** aufgekohlt wird. Der C-Pegel kann für den gewählten Stahl Tabellen oder Simulationen entnommen werden, oder in wenigen Versuchen ermittelt werden. Eine Messung des C-Pegels kann in bekannter Weise indirekt über den Partialdruck von Sauerstoff bestimmt werden. Der C-Pegel wird ferner derart eingestellt, dass der Werkzeugstahl des Einsatzes **25** nicht aufgekohlt wird. Beispielsweise liegt der C-Pegel zwischen 0,7 und 0,75. Der Kohlenstoff kann in dem Einsatz **25** abgesenkt oder beibehalten werden.

Die Wärmebehandlung wird durch rasches Abschrecken beendet, beispielsweise in Öl. Der Verbund wird gehärtet. Zweckmäßigerweise folgt auf die Wärmebehandlung ein einmaliges Anlassen bei einer niedrigen Temperatur zwischen 180 Celsius und 210 Celsius, um innere Spannungen abzubauen.

Bei einer Ausgestaltung kann dem Abschrecken des Verbundes auf Raumtemperatur ein Abkühlen auf -60 Celsius bis -120 Celsius folgen. Das Tiefkühlen kann ein Härten des Verbundes begünstigen. Das einmalige Anlassen folgt auf das Tiefkühlen.

## Patentansprüche

1. Herstellungsverfahren für einen Werkzeughalter (4) mit den Schritten:
Formen einer hohlen Spindel (16), die wenigstens eine längliche Aussparung (27) in der Wand aufweist, aus einem ersten Werkstoff, der ein unlegierter oder niedriglegierten Stahl ist,
Formen eines Einsatzes (25) aus einem zweiten Werkstoff, der ein hochlegierten Werkzeugstahl ist, wobei der Einsatz (25) einen zu der Aussparung (27) komplementären Sockel (26) und einen Steg (24) aufweist,
Einlegen des Einsatzes (25) in die hohle Spindel (16), derart dass der Sockel (26) in der Aussparung (27) liegt und der Steg (24) in einen Innenraum (17) der Spindel (16) vorsteht,
Einlöten des Sockels (26) in die Aussparung (27) bei einer Temperatur, die über der AC3-Temperatur des ersten Werkstoffs und der AC3-Temperatur des zweiten Werkstoffs liegt,
Abkühlen des Verbundes aus der hohlen Spindel (16) und dem Einsatz (25),
Durchführen einer Wärmebehandlung des Verbundes in einer kohlenstoffhaltigen Atmosphäre, deren Kohlenstoffgehalt ausreichend zum Aufkohlen der hohlen Spindel (16) und nicht ausreichend zum Aufkohlen des Einsatzes (25) ist, wobei die Wärmebehandlung des Verbundes bei einer Temperatur zwischen 800 Celsius und 950 Celsius erfolgt und
Abschrecken des Verbundes in einem Flüssigkeitsbad anschließend an die Wärmebehandlung.

2. Herstellungsverfahren nach Anspruch 1, **dadurch gekennzeichnet, dass** der Wärmebehandlung des Verbundes ein Anlassen bei 180 Celsius bis 210 Celsius erfolgt.

3. Herstellungsverfahren nach Anspruch 1 oder 2, **dadurch gekennzeichnet, dass** der Einsatz (25) mittels eines Schmiedeverfahrens oder eines Feingussverfahrens geformt wird.

4. Herstellungsverfahren nach einem der vorhergehenden Ansprüche, **dadurch gekennzeichnet, dass** der erste Werkstoff einen Kohlenstoffgehalt von maximal 0,4 % aufweist.

5. Herstellungsverfahren nach einem der vorhergehenden Ansprüche, **dadurch gekennzeichnet, dass** der erste Werkstoff einen metallischen Legierungsanteil von weniger als 5 % aufweist.

6. Herstellungsverfahren nach einem der vorhergehenden Ansprüche, **dadurch gekennzeichnet, dass** der zweite Werkstoff einen Kohlenstoffanteil von wenigstens 0,8 % ausweist.

7. Herstellungsverfahren nach einem der vorhergehenden Ansprüche, **dadurch gekennzeichnet, dass** der zweite Werkstoff einen metallischen Legierungsanteil von wenigstens 7 % aufweist.

8. Herstellungsverfahren nach einem der vorhergehenden Ansprüche, **dadurch gekennzeichnet, dass** der zweite Werkstoff ein Kaltarbeitsstahl oder ein Schnellarbeitsstahl ist.
